Europäisches Patentamt

European Patent Office

Office européen des brevets

(19)

(11) Veröffentlichungsnummer: **0 263 381 B1**

(12) # EUROPÄISCHE PATENTSCHRIFT

(45) Veröffentlichungstag der Patentschrift: **24.07.91**

(51) Int. Cl.⁵: **G06K 15/12, B41J 2/435**

(21) Anmeldenummer: **87114065.3**

(22) Anmeldetag: **25.09.87**

(54) **Thermo-Transfer-Druckeinrichtung.**

(30) Priorität: **30.09.86 DE 3633270**

(43) Veröffentlichungstag der Anmeldung:
**13.04.88 Patentblatt 88/15**

(45) Bekanntmachung des Hinweises auf die
Patenterteilung:
**24.07.91 Patentblatt 91/30**

(84) Benannte Vertragsstaaten:
**AT CH DE FR GB IT LI NL SE**

(56) Entgegenhaltungen:
**EP-A- 0 177 093**
**CH-A- 478 672**
**US-A- 3 854 808**

**PATENT ABTRACTS OF JAPAN, Band 10, Nr.**
**18 (M-448)[2075], 24. January 1986; & JP-A-60**
**176 781 (FUJI XEROX K.K.) 10-09-1985**

(73) Patentinhaber: **Siemens Aktiengesellschaft**
**Wittelsbacherplatz 2**
**W-8000 München 2(DE)**

(72) Erfinder: **Mugrauer, Hubert, Dipl-Ing. (FH)**
**Parkstrasse 38**
**W-8011 Pöring(DE)**

## Beschreibung

Die Erfindung bezieht sich auf eine Thermo-Transfer-Druckeinrichtung mit einem Druckkopf, der eine Vielzahl von zweidimensional angeordneten und aufgrund einer Druckinformation gesteuerten optischen Schaltzellen aufweist. Über diese Schaltzellen wird die von einer Energiequelle abgegebene Energie parallel auf in einem Raster angeordnete Bildpunkte übertragen, die in der Ebene eines bandförmigen Farbstoffträgers liegen, so daß bei ausreichend hoher lokaler Energieaufnahme der Farbstoff lokal vom Farbstoffträger auf einen anliegenden Druckträger übertragen wird.

In modernen Druckern, die vorzugsweise als periphere Geräte von Datenverarbeitungssystemen eingesetzt werden, werden zunehmend nichtmechanische Druckprinzipien realisiert. Dabei haben sich unter anderem auch Drucker, die nach dem elektrofotografischen Prinzip arbeiten, weithin durchgesetzt. Dieses Druckprinzip ist relativ kompliziert und damit auch kostspielig.

Eines der anderen an sich bekannten, wenn auch bisher weniger erfolgreichen nichtmechanischen Druckprinzipien ist das Prinzip des Thermo-Transfer-Druckes. Nach diesem Prinzip soll lokal, also in Mikropunkten nahe an bzw. auf die Oberfläche eines Druckträgers eine entsprechende Energiemenge gebracht werden, durch die die Erzeugung eines Bildpunktes ausgelöst wird. Dies kann z. B. dadurch geschehen, daß Spezialpapiere verwendet werden, die sich beim Auftreffen von Strahlungsenergie verfärben. Nachteilig ist hierbei zunächst die Verwendung eines Spezialpapieres, dann aber auch die damit einhergehende Beschränkung in der farblichen Erscheinung des Druckergebnisses. Darüber hinaus läßt bei bekannten Thermo-Transfer-Druckeinrichtungen, die mit derartigen Spezialpapieren arbeiten, auch die Druckqualität, d. h. die Schärfe der so erzeugten Abdrucke zu wünschen übrig.

Wenn man das Prinzip des Thermo-Transfer-Drucks ohne Spezialpapiere realisieren will, müssen Farbstoffteilchen nach dem gewünschten Muster, ausgelöst durch lokale Zuführung von Energie, auf den Druckträger übertragen werden. Bekannte Lösungen für diese Ausführungsform des Thermo-Transfer-Druckprinzipes können nicht voll befriedigen, sie lassen entweder hinsichtlich der Druckleistung und/oder auch der Druckqualität zu wünschen übrig und sind daher z. B. im Wettbewerb mit Hochleistungs-Druckern, die ein elektrofotografisches Druckprinzip verwirklichen, nicht konkurrenzfähig. Das beruht unter anderem darauf, daß es bisher schwierig ist, eine ausreichend hohe Energiemenge für das Fixieren von Farbstoffteilchen in Bildpunkten eines Druckmusters zur Verfügung zu stellen und diese Energieübertragung auch noch mit einer entsprechend hohen Frequenz zu modulieren, die Voraussetzung für eine hohe Druckleistung, aber auch Druckqualität ist.

Daraus wird deutlich, daß bei Thermo-Transfer-Druckern zwei wesentliche Problembereiche bestehen: Der eine ist die Druckfarbe als solche und die Art ihrer Übertragung auf den Druckträger, denn dies bestimmt die notwendige Energiemenge. Der andere Problembereich ist der Druckkopf, d. h. also diejenige Einrichtung, mit der ein momentanes energetisches Abbild des gewünschten Druckmusters nahe oder auf der Oberfläche des Druckträgers erzeugt wird. Bekannte Druckköpfe für ThermoTransfer-Druck weisen beispielsweise beheizte Schreibelektroden auf, die mit dem Druckträger in Kontakt stehen. Problematisch ist hier die Verschleißfestigkeit, aber auch die thermische Trägheit der Druckelemente. Weiterhin ist bei konventionellen Lösungen nach dem Thermo-Transfer-Druckprinzip die benötigte Gesamtenergie zu hoch. Bekannte Lösungen für die Realisierung des an sich seit langem bekannten Thermo-Transfer-Druckprinzips sind daher bisher immer noch unbefriedigend und gegenüber anderen nichtmechanischen Druckprinzipien nicht ausreichend konkurrenzfähig, so daß sich solche Lösungen nicht durchgesetzt haben.

Die Erfindung geht von der Überlegung aus, daß Fortschritte auf dem Gebiet der Opto-Elektronik die Mittel zur Verfügung stellen, einen Zeichengenerator zu realisieren, dessen Auflösung groß genug ist, um Druckergebnisse in Offsetqualität zu erzielen. So ist beispielsweise aus EP-A-177 093 ein magnetooptischer Druckkopf bekannt. Dieser besteht aus einer Lichtquelle, einer zwischen dieser und einem lichtempfindlichen Aufzeichnungsträger angeordneten Lichtschaltmaske und einem Abbildungssystem zum Abbilden einer Reihe von durch die Lichtschaltmaske gebildeten Lichtpunkten auf einem lichtempfindlichen Aufzeichnungsträger. Die Lichtschaltmaske besteht aus einer Vielzahl von einzelnen Schaltzellen, in denen linear polarisiertes Licht beim Durchlaufen einer dünnen ferromagnetischen und magnetooptischen Granatschicht in der Schwingungsebene gedreht wird. Das Vorzeichen dieser Polarisationsdrehung hängt ab von der Magnetisierungsrichtung in der Schicht.

Wesentlich bei dem bekannten optischen Zeichengenerator ist die Verwendung einer monolithischen, integrierten Lichtschaltmaske mit matrixförmig auf einem Substrat ausgebildeten Lichtschaltelementen in Verbindung mit einem speziellen Abbildungssystem. Dieses besteht aus einzelnen, fliegend angeordneten Lichtleitfasern, die an ihrem Lichteintrittsende mit den Lichtschaltelementen optisch verbunden sind und deren Lichtaustrittsenden linienförmig nebeneinander in äquidistanten Abständen angeordnet sind. Mit diesem Abbildungssystem soll es möglich sein, teure mehrlinsige Objektive zu vermeiden und etwa 1:1 Abbildung der Lichtpunkte in der Ebene der Schaltmaske auf die Abbildungsebene im Bereich der Druckstation zu erzielen.

Ein Nachteil derartiger optischer Zeichengeneratoren hinsichtlich ihrer Verwendung bei Thermo-Transfer-Druckern besteht darin, daß sich mit ihnen nur eine begrenzte Energiemenge gesteuert übertragen läßt. Das Anwendungsgebiet des beschriebenen Druckkopfes soll daher ein optischer Drukker zum zeilenweisen Belichten eines optisch empfindlichen Aufzeichnungsträgers oder Zwischenträgers sein. Von dem Träger soll dann z. B. durch ein fotografisches oder - im Fall der Elektrofotografie - durch ein elektrofotografisches Verfahren ein optisches Bild hergestellt werden. Damit ist verdeutlicht, daß der bekannte optische Druckkopf unmittelbar nur für eine Verwendung bei energiearmen Druckverfahren gedacht ist, zu denen der konventionelle Thermo-Transfer-Druck eben nicht gehört.

Um optische Zeichengeneratoren bei Thermo-Transfer-Druckern befriedigender Druckleistung einsetzen zu können, muß außerdem das Energieproblem beherrscht werden. Das bedeutet, die notwendige Druckenergie muß im Vergleich zu konventionellen Thermo-Transfer-Druckern verringert werden. Einen Ansatzpunkt dafür bieten aus der Offsetdrucktechnik bekannte thermoplastische Druckfarben mit niedrigem Schmelzpunkt. Doch reicht ein niedriger Schmelzpunkt an sich noch nicht aus. Zum einen ist auch bei diesen Druckfarben das Absorptionsverhalten der Grundfarben Schwarz, Blau, Rot und Gelb im Emissionsbereich üblicher Strahlungsquellen, d. h. bei Wellenlängen zwischen 300 und 2000 nm sehr unterschiedlich. So erscheint ein monochromatischer Schwarzdruck mit der Grundfarbe Schwarz unter Verwendung eines optischen Zeichengenerators noch möglich, einem Mehrfarbendruck sind aber wegen der schlechteren Absorptionskoeffizienten der übrigen Gundfarben enge Grenzen gesetzt.

Das Problem der unterschiedlichen Wärmeabsorption bei verschiedenen Grundfarben einer thermoplastischen Farbe ist an sich bekannt. Zur Lösung dieses Problems ist in CH-A-478 672 ein Material mit einer Schicht aus thermoplastischer Farbe vorgeschlagen, das eine weitere Schicht aus wärmeabsorbierendem Material aufweist. Diese wärmeabsorbierende Schicht kann bei ausreichender mechanischer Festigkeit die Trägerschicht für die thermoplastische Farbe bilden oder aber auf einer strahlendurchlässigen Trägerschicht befestigt sein. Welche Materialien im einzelnen für die Trägerschicht, die wärmeabsorb ierende Schicht oder die thermoplastische Farbe in Frage kommen, ist in dem genannten Dokument nicht angegeben, wohl aber daß ein derartiger Farbstoffträger als regenerierbares Farbband, wenn auch für Druck- oder Kopierverfahren allgemein, insbesondere für sogenannte Strahlungsschreibmaschinen in Frage käme.

Was darunter zu verstehen ist, ist dem Dokument US-A-3,845,808 des gleichen Erfinders zu entnehmen. Dort ist ein Thermodruckverfahren beschrieben, bei dem von einer im übrigen nicht näher spezifizierten Strahlungsquelle abgegebene Strahlung in eine Druckstation projiziert wird. Durch eine wahlweise in den Strahlengang gestellte Maske, die aus einer Vielzahl von vorgegebenen Masken ausgewählt wird, wird die Kontur des auf die Druckstation projizierten Strahlenbündels entsprechend dem jeweils gewünschten Druckbild modifiziert. Dies wird durch die Verwendung einer Kreisscheibe erreicht, auf deren Umfang die vorbestimmten Masken, die jeweils die Kontur eines Druckbuchstabens aufweisen, angeordnet sind. Durch gesteuerte Drehbewegungen der Kreisscheibe werden seriell die der gewünschten Aufeinanderfolge von Druckbuchstaben entsprechenden Masken in den Strahlengang der Strahlungsquelle gedreht und damit im Bereich der Druckstation die entsprechenden Abbildungen der seriellen Druckinformation erzeugt.

In dem genannten Dokument wird dargelegt, daß sich dieser Zeichengenerator sowohl in Verbindung mit reinen Thermodruckverfahren, die strahlungsempfindliche Druckträger verwenden als auch in Verbindung mit Thermo-Transfer-Verfahren einsetzen läßt. Bei letzteren können nach der Druckschrift auch endlose, regenerierbare Farbstoffträger eingesetzt werden. Beschrieben sind dabei zwei Alternativen. Die eine bezieht sich auf einen mit einer thermoplastischen Karbonwachsschicht beschichteten Farbstoffträger, der nach Durchlaufen der Druckstation in einem beheizten Farbwerk vollständig neu beschichtet wird. Die andere Alternative beruht auf einem Farbstoffträger, bei dem mit Hilfe von aus der Elektrofotografie bekannten Umladevorgängen lokal die verbrauchten Stellen des Farbstoffträgers erneut beschichtet werden.

Ein wesentlicher Nachteil des bekannten Druckverfahrens ist die Art und Weise, wie das Druckbild erzeugt wird. Die Qualität des Druckerzeugnisses hängt allein schon von der Verwendung entsprechender konturscharfer Masken ab. Das Druckverfahren ist zwangsläufig langsam, bedingt durch das mechanische Verstellen der Masken und ist außerdem - ähnlich wie bei mechanischen Druckern - auf einen vorher festgelegten Zeichensatz beschränkt.

Der Erfindung liegt daher die Aufgabe zugrunde, eine Thermo-Transfer-Druckeinrichtung der eingangs genannten Art mit einem möglichst niedrigen Energiebedarf bei hoher Druckleistung und guter Druckqualität zu schaffen, die sich für Mehrfarbendruck eignet, ohne dafür speziell entwickelte Druckfarben zu benötigen, und durch die damit das Thermo-Transfer-Druckprinzip wirtschaftlich einsatzfähig wird.

Diese Aufgabe wird bei einer Thermo-Transfer-Druckeinrichtung der eingangs genannten Art erfindungsgemäß durch die im Kennzeichen des Patentanspruches 1 beschriebenen Merkmale gelöst.

Die erfindungsgemäße Lösung nutzt zum einen aus, daß Fortschritte vor allem in der Offset-Drucktechnik einen Farbstofftyp geschaffen haben, dessen spezielle Eigenschaften, in anderer Weise als bei seinen konventionellen Anwendungsfällen, gerade seine Verwendung auch als Farbstoff für den vorliegenden Fall geeignet erscheinen lassen. Dabei handelt es sich um eine thermoplastische Druckfarbe, die in der Drucktechnik als Cold-Set- bzw. Heiß-Carbon-Farbe bekannt ist. Diese Farbstoffe sind für den konventionellen Anwendungsfall so interessant, da sie zu den Schnelltrocken-Farben zählen. Sie bestehen aus Wachsen und wachsähnlichen Produkten, in denen bei der Herstellung in flüssigem Zustand Farbpigmente und Ruße feinst dispergiert werden. Wohl der bekannteste Anwendungsfall für diese Druckfarben sind Durchschreibeformularsätze, bei denen diese Druckfarbe früher verwendetes Kohlepapier ersetzt hat.

Neben dem schnellen Trocknen ist für den vorliegenden Anwendungsfall ist von wesentlicher Bedeutung, daß sich diese Druckfarben mit einem gegenüber anderen Farbstoffen geringeren Energieaufwand plastifizieren lassen, so daß sie auf einen Druckträger übertragen werden können. Dieser niedrige Energieverbrauch für die Umwandlung aus dem festen in den flüssigen Zustand der Druckfarbe ist Voraussetzung für die Verwendung eines Zeichengenerators, der berührungslos rein optisch die notwendige Strahlungsenergie auf die Grenzschicht zwischen den Farbstoffträger und den Druckträger transportiert.

Ermöglicht wird dies durch den Schichtaufbau des Farbstoffträgers, der das unterschiedliche Absorptionsverhalten der verschiedenen Grundfarben dieses Druckfarbentyps zwar nicht ausschalten kann, aber in seiner Auswirkung auf den Druckvorgang eliminiert. Auf das Substrat, ein transparentes Kunststoffband, ist eine Zwischenschicht aus einem Material aufgebracht, dessen Schmelzpunkt über dem Schmelzpunkt der thermoplastischen Druckfarbe liegt und das außerdem einen hohen Energieabsorptionskoeffizienten aufweist. Diese Zwischenschicht bildet den Träger für die Druckfarbe und wirkt damit wie ein Energiespeicher, der die aufgefangene Strahlungsenergie durch lokale Transmission auf die Druckfarbe überträgt und diese bei ausreichender Energiezufuhr erschmilzt.

Es gibt eine ganze Anzahl von insbesondere metallischen Materialien mit den geforderten physikalischen Eigenschaften. Als besonders zweckmäßiges Material ist beispielhaft Chromdioxid zu nennen. Dieses Material wird - in einem ganz anderen Anwendungsbereich - vielfach in Verbindung mit einem bandförmigen Träger eingesetzt. Die dabei gesammelten Erfahrungen in Dünnschichtverarbeitung lassen sich auch im vorliegenden Fall mit Vorteil einsetzen. Denn auch hier kommt es mit darauf an, die Zwischenschicht ausreichend dünn, jedoch fest haftend aufzubringen, um den Umdruckvorgang möglichst trägheitslos durchführen zu können.

Zweckmäßig erweist sich hier aus diesem Grunde ein Schichtaufbau mit einem ca. 10 $\mu$m dicken Kunststoffband und einer etwa 2 $\mu$m dicken Zwischenschicht, auf die eine 2 bis 5 $\mu$m dicke Farbschicht aus der thermoplastischen Druckfarbe aufgetragen wird.

Da der Farbstoffträger immer wieder regeneriert wird, ist eine hohe Abriebfestigkeit der Zwischenschicht von Vorteil. Auch diese Eigenschaft ist bei Chromdioxid zu finden.

Insgesamt also ermöglicht die technische Lehre der Erfindung, ein Druckwerk nach dem Thermo-Transfer-Druckprinzip auszubilden, das mit einer verhältnismäßig niedrigen Energiemenge Druckergebnisse liefert, die durchaus mit denen anderer Druckprinzipien vergleichbar sind. Die Erfindung schafft die Voraussetzung für den Einsatz moderner optischer Elemente, sowohl hinsichtlich der Strahlungsquelle als auch der eigentlichen Elemente des Zeichengenerators. Sie ermöglicht so einen kompakten Aufbau mit einem berührungslosen "Druckkopf", dessen prinzipieller Aufbau hinsichtlich des einzelnen Kanales unter Verwendung handelsüblicher Produkte einfach, verschleißfest und kostengünstig ist.

Bei der Kompaktheit eines derartigen Druckwerkes sind nicht nur monochrome Lösungen möglich. Die bei anderen nichtmechanischen Druckprinzipien bereits gewonnenen Erfahrungen im Hinblick auf einen Mehrfarbendruck hoher Qualität, lassen sich auch hier verwerten, denn konstruktiv ist es ohne weiteres möglich, mehrere monochrome Druckwerke seriell hintereinander zu schalten und so eine Mehrfarben-Druckeinrichtung zu schaffen.

Andere Weiterbildungen der Erfindung, sowie Einzelheiten zu Ausführungsformen und deren Vorteile sind der nachfolgenden Beschreibung eines Ausführungsbeispieles, die anhand der Zeichnung erfolgt, zu entnehmen. Dabei zeigt:

FIG 1 eine Prinzipdarstellung des Druckwerkes eines Strahlungs-Thermo-Transfer-Druckers mit einem optischen Zeichengenerator, sowie einem umlaufenden Farbstoffträger,

FIG 2 in schematischer Darstellung eine Ausführungsform einer Schaltzelle eines solchen Zeichengenerators,

FIG 3 eine Ausführungsform eines Strahlungs-Thermo-Transfer-Druckers für farbigen Druck, bei dem eine Mehrzahl von Druckwerken gemäß FIG 1 seriell hintereinander angeordnet ist, wobei jedes dieser Druckwerke selbst ein monochromes Druckergebnis liefert und

FIG 4 schematisch den Schichtaufbau des Farbstoffträgers.

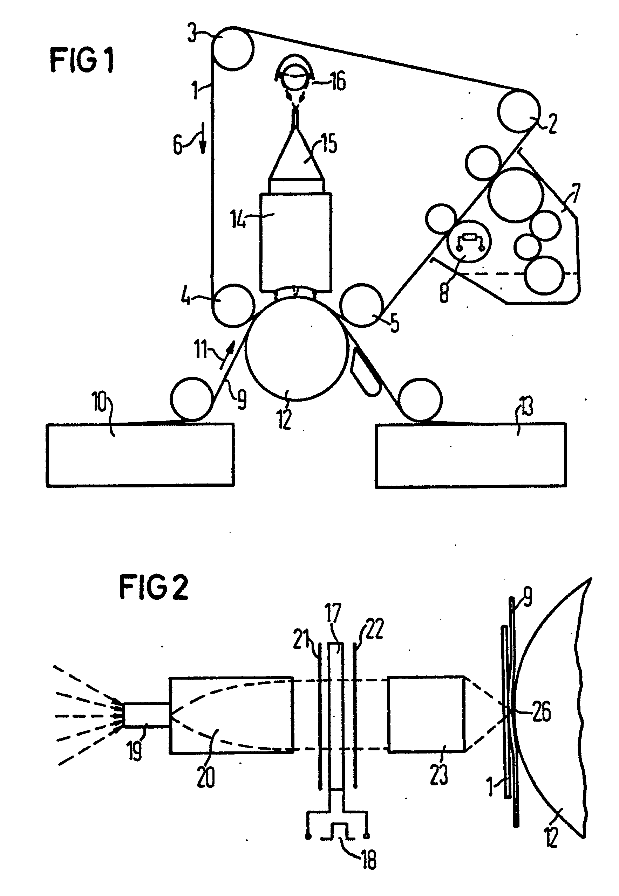

Bei dem in FIG 1 dargestellten Druckwerk läuft ein endloser, bandförmiger Farbstoffträger 1, über Umlaufrollen 2 bis 5 transportiert, im Druckwerk um. Die Transportrichtung des Farbstoffträgers 1 ist durch einen Pfeil 6 angedeutet. Im Umlauf wird der Farbstoffträger 1 durch ein Farbwerk 7 gezogen. Im Farbwerk wird auf den bandförmigen Farbstoffträger 1 eine dünne Schicht von nur etwa 2 bis 5 $\mu$m Dicke einer thermoplastischen Druckfarbe aufgebracht. Als Druckfarben eignen sich aus der Buchdruck- bzw. der Offsetdrucktechnik bekannte und als Cold-set-Farben oder Heiß-Carbon-Farben bezeichnete Druckfarben. Sie zählen zu den Schnelltrocken-Farben, bestehen aus Wachsen oder wachsähnlichen Produkten, in die im flüssigem Zustand, Farbpigmente und Ruße feinst dispergiert werden. Eine derartige Farbmasse ist bei Raumtemperatur erstarrt. Deshalb sind die für die Verarbeitung solcher Farben bekannten Farbwerke beheizt, um die Druckfarbe zu verflüssigen. Bei dem hier angesprochenen Farbtyp ist eine Erwärmung des Farbwerkes auf ca. 100° C ausreichend.

Obwohl mit derartigen Farbwerken konventionell die thermoplastische Druckfarbe direkt auf den Druckträger, vorzugsweise Papier, aber auch Kunststoffolien aufgebracht wird, kann das Konstruktionsprinzip bekannter Farbwerke auch für den vorliegenden Anwendungsfall übernommen werden. Es genügt daher hier eine zusammenfassende Beschreibung des Vorganges zum Auftragen der Druckfarbe. Wie in FIG 1 angedeutet ist, wird der in das Farbwerk 7 einlaufende Farbstoffträger 1 mit seiner Schichtseite zunächst an eine erwärmte Heizrolle 8 angedrückt, deren Wärmekapazität ausreicht, um die dem Farbstoffträger 1 noch anhaftende Farbschicht einzuschmelzen. Anschließend wird über mehrere Walzen und Abstreifrakel die Farbschicht auf den bandförmigen Farbstoffträger 1 neu aufgetragen.

Nach dem Verlassen des Farbwerkes 7 läuft der neu beschichtete Farbstoffträger 1 über die Umlaufrollen 2, 3 in die eigentliche Umdruckstation ein, kühlt auf dieser Strecke unter den Erstarrungspunkt ab und hat damit keinerlei Neigung bei bloßem Kontakt mit einem zu bedruckenden Medium dieses zu benetzen.

Das zu bedruckende Medium, der Druckträger 9, ist normalerweise Papier in Form von Einzelblättern oder Papierbahnen, es können jedoch auch andere Materialien, wie Kunststoffolien oder Blech eingesetzt werden. Im vorliegenden Ausführungsbeispiel gemäß FIG 1 wird der Druckträger 9 aus einer Eingabestation 10 entnommen und in Pfeilrichtung 11 in die Umdruckstation des Thermo-Transfer-Druckers eingeführt. Diese Umdruckstation enthält unter anderem eine Andruckrolle 12, die in Verbindung mit den Umlaufrollen 4 und 5 für einen direkten Kontakt der Schichtseite des bandförmigen Farbstoffträgers 1 mit dem Druckträger 9 sorgt. Auf der Ausgabeseite der Umdruckstation schließlich ist eine Ablagestation 13 für den bedruckten Druckträger 9 angeordnet. Die insoweit beschriebenen Module des Druckwerkes entsprechen durchaus konventionellen Einrichtungen bei Druckern, auch dann wenn sie nicht unbedingt in Verbindung mit Thermo-Transfer-Druckwerken bekannt sind. Eine ins einzelne gehende Beschreibung dieser Module erscheint daher im gegebenen Zusammenhang nicht erforderlich.

Wesentlicher für den vorliegenden Sachverhalt ist der Zeichengenerator 14, der in der Darstellung von FIG 1 oberhalb der Andruckrolle 12 angeordnet ist und über ein Glasfaserbündel 15 die für den Druckvorgang notwendige Strahlungsenergie aus einer Strahlungsquelle 16 mit integriertem Reflektor erhält. Als Strahlungsquelle kommt beispielsweise eine handelsübliche Xenon-Kurzbogenlampe in Betracht, so wie sie z. B. von der Firma ILC Technology als sogenannte CERMAX (eingetragenes Warenzeichen)-Lampen angeboten werden.

Der Zeichengenerator 14 enthält ein zweidimensionales Feld von Schaltzellen, die es erlauben, punktweise Energie durch den transparenten Farbstoffträger 1 hindurch auf den Druckträger 9 zu fokussieren und dabei in diesen Brennpunkten lokal die auf den bandförmigen Farbstoffträger 1 aufgebrachte Farbschicht aufzuschmelzen. In diesem plastischen Zustand wird sie auf den Druckträger 9 übertragen und diffundiert je nach der Oberfläche des Druckträgers mehr oder minder in diese hinein. Damit ist der Umdruckvorgang beendet und der sich wiederholende Prozeß beginnt von neuem mit der Auffrischung des Farbstoffträgers 1 im Farbwerk 7.

Eine mögliche Ausführungsform einer einzelnen Schaltzelle eines solchen Zeichengenerators 14 ist in FIG 2 dargestellt. Sie weist ein an sich aus der Optoelektronik bekanntes optisches Schaltelement 17 auf. Dieses Schaltelement ist ein transparentes, ferroelektrisches Keramikplättchen, das aus mit Lanthan dotiertem Bleizirkonattitanat $(Pb, Ld)(Zr, Ti) O_3$ besteht und in der Optoelektronik auch als PLZT-Element bezeichnet wird. Für Anwendungen als Schaltelement wird ein solches Keramikplättchen mit transparenten Elektrodenflächen beidseitig beschichtet, so daß an diese Elektroden eine pulsförmige Spannung anlegbar ist, wie in FIG 2 durch das Bezugszeichen 18 schematisch angedeutet ist.

Das genannte optische Schaltelement 17 dreht unter anderem die Polarisationsebene eines einfallenden Lichtstrahles. Dieser Effekt wird in der vorliegenden Ausführungsform benutzt. Mittels einer anhand von FIG 1 bereits erläuterten Strahlungsquelle 16 wird in eine Glasfaser 19 von etwa 75 bis 300 μm Durchmesser die zum lokalen Schmelzen des Farbstoffes nötige Energie in die Schaltzelle eingekoppelt. Diese Strahlung wird mit einer ersten Gradientenfaser 20 von 1 bis 2 mm Durchmesser in ein paralleles Strahlenbündel mit vergrößertem Strahldurchmesser umgewandelt. In den Strahlengang ist ein Polarisator 21, daran anschließend das optische Schaltelement 17 und weiterhin ein Analysator 22 gestellt. In Strahlungsrichtung schließt sich eine zweite Gradientenfaser 23 an, deren Länge so abgestimmt ist, daß ein parallel einfallendes Strahlenbündel in einem vorgegebenen Abstand von der bildseitigen Stirnfläche dieser Faser fokussiert wird. Dieser Abstand kann z. B. 3 mm betragen und definiert eine Fokusebene, in der die zu schmelzende Farbschicht des bandförmigen Farbstoffträgers 1 liegt.

Gradientenfasern, wie sie hier zur Anwendung kommen, sind als sogenannte Selfoc (eingetragenes Warenzeichen) Mikrolinsen für mikrooptische Anwendungen bekannt. Im vorliegenden Fall ermöglicht die erste Gradientenfaser 20 die Umwandlung des über die Glasfaser 19 zugeführten engen Lichtbündels in ein paralleles Strahlenbündel mit vergrößertem Strahldurchmesser. Damit kann einerseits die Flußdichte durch den Polarisator 21, das optische Schaltelement 17 und den Analysator 22 im Verhältnis der Querschnittsfläche der Glasfaser 19 zu der der ersten Gradientenfaser 20 verringert werden. Dieses Aufspreizen des Strahlenbündels hat außerdem den Vorteil, daß sich bei gleichen absoluten Toleranzen Lageabweichungen der Zentralachse der beiden Gradientenfasern 20 bzw. 23 zueinander, absolut betrachtet, weniger stark auswirken, d. h. die Strahlung verlustarm in die zweite Gradientenfaser 23 eingekoppelt werden kann.

Die Funktionsweise dieser Schaltzelle beruht darauf, daß der Polarisator 21 eine bestimmte Polarisationsebene der in das optische Schaltelement 17 eintretenden Strahlung festlegt. Wird dann an dieses Element eine elektrische Spannung angelegt, dann bewirkt dies eine Drehung der Polarisationsebene des austretenden Strahlenbündels. Bei geeigneter Bemessung der Spannungsamplitude und einer dazu ausgewählten Lage der Polarisationsebene des Analysators 22 im Hinblick auf die des Polarisators 21 läßt sich so die aus dem Analysator 22 austretende Strahlungsenergie steuern.

Ein optisches Schaltelement 17, bestehend aus der oben beschriebenen ferroelektrischen Keramik, hat den Vorteil, daß es nahezu trägheitslos, d. h. ohne einen Speichereffekt arbeitet. Es ist deshalb für einen pulsartigen Betrieb mit einer entsprechend hohen Pulsfrequenz geeignet. In der beschriebenen Anordnung besteht der wesentliche Vorteil der Schaltzelle von FIG 2 in der relativ geringen Strahlungsdichte, der der Polarisator 21, das Schaltelement 17 und der Analysator 22 ausgesetzt sind. Ferner kann ein sehr guter Kontrast, definiert als das Verhältnis der abgegebenen Strahlungsenergie im eingeschalteten bzw. im ausgeschalteten Zustand, von mehr als 100 bei einem Übertragungsfaktor, d. h. dem Verhältnis von ausgekoppelter zu eingekoppelter Energie von etwa 0,2 erreicht werden.

Für einen aus einem zweidimensionalen Feld derartiger Schaltzeichen bestehenden Zeichengenerator benötigt man eine entsprechende elektronische Steuereinheit, die es gestattet, parallel, d. h. also gleichzeitig eine Vielzahl dieser optischen Schaltelemente 17 anzusteuern, um sie individuell in Abhängigkeit von einer zugeführten Druckinformation inaktiv zu halten bzw. zu aktivieren. Eine derartige Steuereinrichtung könnte völlig analog zu vergleichbaren Steuereinrichtungen aufgebaut werden, wie sie z. B. für bekannte nicht mechanische Drucker zur Drucksteuerung benötigt werden. Eine solche Steuereinheit ist jedoch nicht Gegenstand der Erfindung, so daß es nicht notwendig erscheint, sie hier im einzelnen zu beschreiben.

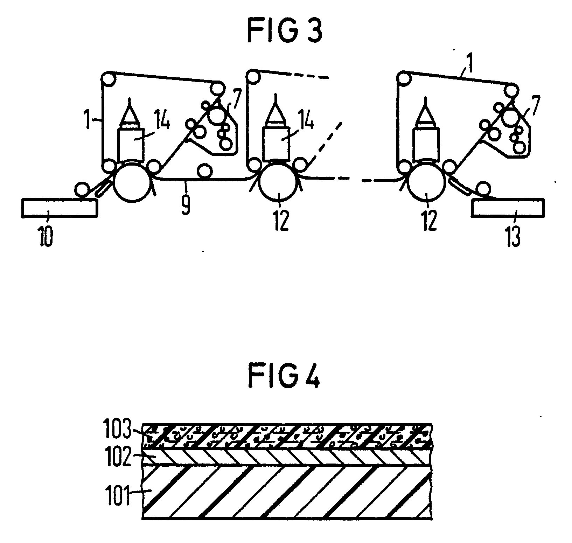

Die vorstehende Beschreibung bezieht sich auf ein monochromes Thermo-Transfer-Druckwerk, denn es ist davon ausgegangen, daß der bandförmige Farbstoffträger 1 ganzflächig auf der dem Druckträger 9 zugewandten Oberfläche mit einer einfarbigen Farbschicht beschichtet ist. In FIG 3 ist schematisch angedeutet, daß mehrere der anhand von FIG 1 näher erläuterten Druckwerke in bezug auf den Druckträger 9 hintereinander geschaltet werden können. Jedes dieser Druckwerke verarbeitet eine von mehreren Grundfarben einer Druckfarbe. Da sich ein monochromes Druckwerk, basierend auf dem erläuterten Prinzip eines Thermo-Transfer-Druckes, auch bei hoher Druckleistung relativ kompakt aufbauen läßt, wird eine solche Hintereinanderschaltung mehrerer Druckwerke für polychromen Druck durchaus möglich, ohne daß ein derartiges Aufbauprinzip deswegen zu einer unverhältnismäßig voluminösen Druckeinrichtung führt. Es kann dabei dem einzelnen Anwendungsfall überlassen bleiben, ob für einen polychromen Drukker ein Drei- oder Vierfarbendruckprinzip zugrundegelegt werden soll.

Im Gegensatz zu dem beschriebenen monochromen Schwarzdruck ergibt sich allerdings eine Schwierigkeit bei Mehrfarbendruck. Diese Schwierigkeit ist darauf zurückzuführen, daß das Absorptionsverhalten der Grundfarben Blau, Rot und Gelb für Strahlungen im Wellenlängenbereich von 300 bis 2000 nm sehr unterschiedlich, in jedem Fall aber schlechter als das entsprechende Absorptionsverhalten der Grundfarbe Schwarz ist. Die für das Umdrucken der Grundfarbe Schwarz ausreichende Energiemenge genügt daher nicht mehr aus, einen mit einer anderen Grundfarbe beschichteten Farbstoffträger 1 ohne weiteres lokal zu erschmelzen.

Denkbar wäre es, zur Lösung dieses Problemes eine noch energiereichere Strahlungsquelle für den Druck bunter Farben einzusetzen. Dies widerspräche aber gerade der erklärten Zielsetzung, die für den Umdruck ausreichende Strahlungsenergie herabzusetzen. Deshalb würde sich alternativ auch anbieten, Spezialfarben, die aus anderen Drucktechnologien bekannt sind, zu verwenden, die ein wesentlich günstigeres Absorptionsverhalten aufweisen. So gibt es Entwicklungen, die darauf abzielen, in einen bunten Farbstoff mit schlecht absorbierenden Farbpigment farbneutrale Stoffe mit hohem Absorptionsvermögen zu dispergieren. Dies wiederum aber widerspricht einer anderen Zielsetzung, die handelsüblichen und kostengünstigen Cold-set-Farben bei einem Thermo-Transfer-Druck als Farbstoff einzusetzen.

Mit diesen Randbedingungen wird das Problem in anderer Weise durch einen Schichtaufbau des Farbstoffträgers 1 gelöst, wie er schematisch in FIG 4 dargestellt ist. Es wird ein transparentes Trägerband 101 mit einer Schichtdicke von ca. 10 μm verwendet, das beispielsweise aus Polyester hergestellt ist. Dieses Trägerband 101 ist mit einer Zwischenschicht 102, bestehend aus einem Material mit hohem Absorptionsvermögen, beschichtet. Die Zwischenschicht ist etwa 2 μm dick und trägt eine Farbstoffschicht 103 mit einer Dicke von etwa 2 bis 5 μm. Als Farbstoff wird eine der Grundfarben der bekannten Cold-set-Farben verwendet.

Das Material der Zwischenschicht 102 soll neben dem hohen Absorptionsvermögen auch einen Schmelzpunkt besitzen, der deutlich über dem Schmelzpunkt dieser Cold-set-Farben liegt. Diese Randbedingung ergibt sich daraus, daß die Zwischenschicht nur als verlustarmer und möglichst trägheitsloser Energiepuffer dienen soll, aus dem die absorbierte Strahlungsenergie durch Transmission möglichst ungehindert lokal in die angrenzende Farbstoffschicht 103 übertragen wird, ohne daß sich der Aggregatzustand der Zwischenschicht 102 dabei verändert.

In Anbetracht des niedrigen Schmelzpunktes der Cold-set-Farben ist dies keine einschneidende Randbedingung, so daß sich zur Herstellung der Zwischenschicht eine Vielzahl von Materialien anbieten. Dabei kann man sich Erfahrungen sowohl aus der Technologie von Kondensatorpapieren als auch Erfahrungen auf dem Gebiet von Magnetbändern zunutze machen. In beiden Fällen werden Kunststoffbänder eingesetzt, auf die dünne metallische Schichten aufgetragen sind. Zwar werden bei den bekannten Anwendungsfällen vor allem andere Eigenschaften der metallischen Schicht, wie hohe elektrische Leitfähigkeit bzw. gute Magnetisierbarkeit angestrebt, jedoch zeigt sich am Beispiel des Chromdioxidbandes aus der Magnetbandtechnik, daß derartige Schichten auch im vorliegenden Anwendungsfall den geschilderten Randbedingungen genügen. Das ohne weiteres auch hier verwendbare Chromdioxidband hat darüber hinaus die Eigenschaft, daß die Chromdioxidschicht zudem eine hohe Abriebfestigkeit aufweist, die im Hinblick auf die gewünschte Regenerierfähigkeit des Farbstoffträgers 1 nur von Vorteil ist.

Dieses Materialbeispiel ist jedoch nicht einschränkend genannt, es illustriert nur die Tatsache, daß die Technologie zur Herstellung eines derartigen Farbstoffträgers an sich wohl bekannt ist und daher dem Fachmann keine Schwierigkeiten bietet. Für den vorliegenden Fall ließen sich aber prinzipiell alle Materialien einsetzen, deren Schmelzpunkt höher als etwa 150° C liegt, die eine hohe Strahlungsabsorption im Wellenlängenbereich von 300 bis 2000 nm aufweisen, vorteilhafterweise eine hohe Abriebfestigkeit aufweisen und sich mit bekannten Dünnschichttechnologien einfach verarbeiten lassen.

## Patentansprüche

1. Thermo-Transfer-Druckeinrichtung mit einem Druckkopf (14), der eine Vielzahl von zweidimensional angeordneten und aufgrund einer Druckinformation gesteuerten Schaltzellen (17) aufweist, über die die von einer Energiequelle abgegebene Energie parallel auf in einem Raster angeordnete Bildpunkte in der Ebene eines bandförmigen Farbstoffträgers (1) übertragen werden, so daß bei ausreichend hoher Energieaufnahme Farbstoff lokal vom Farbstoffträger (1) auf einen anliegenden Druckträger (9) übertragen wird, **dadurch gekennzeichnet,** daß der Druckkopf (14) als optischer Zeichengenerator (14) ausgebildet ist, in dem jede Schaltzelle (20, 17, 23) ein optisches Schaltelement (17) aufweist, das nur im aktivierten Zustand berührungslos an den zugeordneten Bildpunkt (26) eine zum lokalen Aufschmelzen der Farbstoffschicht (103) des Farbstoffträgers (1) ausreichende Strahlungsenergie abgibt, und daß der am optischen Zeichengenerator zusammen mit dem Druckträger (9) vorbeigeführte Farbstoffträger (1) ein regenerierfähiger Farbstoffträger ist, der ein Trägerband (101) aus transparentem Material, eine angrenzende, um nahezu eine Größenordnung dünnere Zwischenschicht (102) aus einem Material mit hohem Absorptionsvermögen im Wellenlängenbereich der Energiequelle (16) und eine an der Zwischenschicht anhaftende Farbstoffschicht (103) aus einem schnell trocknenden, thermoplastischem Farbstoff mit niedrigem Schmelzpunkt aufweist, der um mehr als eine Größenordnung tiefer liegt als der Schmelzpunkt der Zwischenschicht.

2. Thermo-Transfer-Druckeinrichtung nach Anspruch 1, **dadurch gekennzeichnet,** daß die Zwischenschicht (102) des Farbstoffträgers (1) aus einem Material besteht, das zugleich eine hohe Abriebfestigkeit aufweist.

3. Thermo-Transfer-Druckeinrichtung nach einem der Ansprüche 1 oder 2, **dadurch gekennzeichnet,** daß der Farbstoffträger (1) als endloses Band ausgebildet ist, das über Umlaufrollen (2, 3, 4, 5) geführt, kontinuierlich umläuft und dabei auch ein beheiztes Farbwerk (7) durchläuft, in dem seine Farbstoffschicht (103) durch erneutes Beschichten in jedem Umlauf regeneriert wird.

4. Thermo-Transfer-Druckeinrichtung nach Anspruch 3, **dadurch gekennzeichnet,** daß zwischen zwei der Umlaufrollen (4, 5) im Bereich der vom Zeichengenerator (14) erzeugten Bildpunkte (26) eine Andruckrolle (12) vorgesehen ist, über die der Druckträger (9) läuft und die diesen an die Farbstoffschicht des Farbstoffträgers (1) andrückt.

5. Thermo-Transfer-Druckeinrichtung nach Anspruch 4, **dadurch gekennzeichnet,** daß in Umlaufrichtung des Farbstoffträgers (1) gesehen, das Farbwerk (7) hinter der Andruckrolle (12) angeordnet ist und eine Heizeinrichtung (8) aufweist, die die Farbstoffschicht (103) des Farbstoffträgers beim Einlaufen in das Farbwerk zum Schmelzen bringt, so daß im Farbwerk diese Farbstoffschicht kontinuierlich und vollständig regeneriert wird und daß zwischen dem Farbwerk und der vom Zeichengenerator (14) und der Andruckrolle (12) gebildeten Umdruckstation eine Abkühlstrecke vorgesehen ist, so daß der Farbstoffträger mit erstarrter und damit wischfester Farbstoffschicht in diese Umdruckstation einläuft.

6. Thermo-Transfer-Druckeinrichtung nach Anspruch 5, **dadurch gekennzeichnet,** daß zum polychromen Druck in bezug auf eine Transportbahn des Druckträgers (9), die eine Eingabestation (12) des Druckträgers mit einer Ausgabestation (13) verbindet, mehrere Druckwerke, jeweils einen Zeichengenerator (14), eine Umlaufstrecke (2, 3, 4, 5, 12) mit dem kontinuierlich umlaufenden Farbstoffträger (1) und ein Farbwerk (7) enthaltend, in Serie angeordnet sind, wobei die Farbstoffträger (1) jeweils mit einer Grundfarbe für den Mehrfarbendruck beschichtbar sind.

## Claims

1. Thermal-transfer printing device having a printer head (14) which has a multiplicity of two-dimensionally arranged switching cells (17) controlled on the basis of an item of printing information, via which switching cells the energy emitted from an energy source is transmitted in parallel to picture elements arranged in a raster in the plane of a tape-shaped ink carrier (1) so that, when the energy drain is sufficiently high, ink is transferred locally from the ink carrier (1) to a print carrier (9) resting against it, characterised in that the printer head (14) is constructed as an optical character generator (14), in which each switching cell (20, 17, 23) has an optical switching element (17) which, exclusively in the activated state and without touching the associated picture element (26), emits an amount of radiant energy sufficient to locally melt the ink layer (103) of the ink carrier (1), and in that the ink carrier (1) led past on the optical character generator together with the print carrier (9) is a regenerable ink carrier which has a carrier tape (101) of transparent material, an adjacent intermediate layer (102) which is thinner by almost one order of magnitude and made of a material with a high absorption capacity in the wavelength range of the energy source (16) and an ink layer (103) which adheres to the intermediate layer and is made of a quickly drying, thermoplastic ink with a low melting point which is lower than the melting point of the intermediate layer by more than one order of magnitude.

2. Thermal-transfer printing device according to Claim 1, characterised in that the intermediate layer (102) of the ink carrier (1) consists of a material which has at the same time a high scuff resistance.

3. Thermal-transfer printing device according to one of Claims 1 or 2, characterised in that the ink carrier (1) is constructed as an endless tape which is guided via circulation rollers (2, 3, 4, 5), circulates continuously and at the same time also runs through a heated inking unit (7) in which its ink layer (103) is regenerated by being recoated during each circulation.

4. Thermal-transfer printing device according to Claim 3, characterised in that a contact roller (12) is provided between two of the circulation rollers (4, 5) in the region of the picture elements (26) generated by the character generator (14), the print carrier (9) running over said contact roller which presses said print carrier against the ink layer of the ink carrier (1).

5. Thermal-transfer printing device according to Claim 4, characterised in that, viewed in the circulating direction of the ink carrier (1), the inking unit (7) is arranged behind the contact roller (12) and has a heating device (8) which causes the ink layer (103) of the ink carrier to melt when running into the inking unit, so that this ink layer is continuously and completely regenerated in the inking unit, and in that a cooling section is provided between the inking unit and the transfer station formed by the character generator (14) and the contact roller (12), so that the ink carrier runs into this transfer station with a solidified and thus smudgeproof ink layer.

6. Thermal-transfer printing device according to Claim 5, characterised in that, for the purpose of polychromatic printing with respect to a conveying path of the print carrier (9), which transport path connects an input station (12) of the print carrier to an output station (13), a plurality of printing units, in each case containing a character generator (14), a circulation section (2, 3, 4, 5, 12) with the continuously circulating ink carrier (1), and an inking unit (7), are arranged in series, the ink carriers (1) being coatable in each case with a primary colour for the multi-colour print.

**Revendications**

1. Dispositif d'impression à transfert thermique, comprenant une tête d' impression (14), qui comporte un grand nombre de cellules optiques de commutation (17), à disposition bidimensionnelles, qui sont commandées en fonction d'une information d'impression et par lesquelles les énergies fournies par une source d'énergie sont transmises en parallèle à des points images disposés suivant une trame dans le plan d'un support d'encre (1) en forme de ruban de manière à transférer, lorsque l'énergie absorbée est suffisamment grande, de l'encre localement du support d'encre (1) à un support à imprimer (9) adjacent, caractérisé en ce que la tête d'impression (14) est constituée en générateur optique de caractères (14), dans lequel chaque cellule de commutation (20, 17, 23) comporte un élément optique de commande (17), qui ne fournit, qu'à l'état activé et sans contact, au point image (26) associé une énergie rayonnante suffisante pour faire fondre localement la couche d'encre (103) du support d'encre (1), et en ce que le support d'encre (1) qui défile avec le support à imprimer (9) devant le générateur optique de caractères est un support d'encre susceptible d'être régénéré, qui comporte un ruban-support (101) en matière transparente, une couche intermédiaire (102) d'un ordre de grandeur plus mince et en une matière à grand pouvoir absorbant dans le domaine des longueurs d'onde de la source d'énergie (16) et une couche d'encre (103), adhérant à la couche intermédiaire et en une encre thermoplastique, séchant rapidement et à point de fusion bas, qui est plus bas de plus d'un ordre de grandeur que celui de la couche intermédiaire.

2. Dispositif d'impression à transfert thermique suivant la revendication 1, caractérisé en ce que la couche intermédiaire (102) du support d'encre (1) est en un matériau qui présente en même temps une grande résistance à l'abrasion.

3. Dispositif d'impression à transfert thermique suivant l'une des revendications 1 ou 2, caractérisé en ce que le support d'encre (1) est constitué sous la forme d'une bande sans fin qui, en passant sur des rouleaux de renvoi (2, 3, 4, 5), circule en continu et passe également dans un dispositif d'encrage (7) chauffé, dans lequel sa couche d'encre (103) est régénérée à chaque passage par application d'un revêtement nouveau.

4. Dispositif d'impression à transfert thermique suivant la revendication 3, caractérisé en ce qu'il est prévu, entre deux des rouleaux de renvoi (4, 5), dans la région des points images (26) produits par le générateur de caractères (14), un rouleau de pression (12) sur lequel passe le support à imprimer (9) et qui applique celui-ci sur la couche d'encre du support d'encre (1).

5. Dispositif d'impression à transfert thermique suivant la revendication 4, caractérisé en ce que, considéré dans le sens de circulation du support d'encre (1), le dispositif d'encrage (7) est disposé en aval du rouleau de pression (12) et comporte un dispositif de chauffage (8) qui porte au point de fusion la couche d'encre (103) du support d'encre lors du passage dans le dispositif d'encrage, de sorte que dans le dispositif d'encrage, cette couche d'encre est régénérée en continu et complètement, et en ce que entre le dispositif d'encrage et le poste de transfert formé par le générateur de caractères (14) et le rouleau de pression (12), est prévue une zone de refroidissement, de sorte que le support d'encre entre dans ce poste de transfert alors que sa couche d'encre est solidifiée et résiste donc à l'essuyage.

6. Dispositif d'impression à transfert thermique suivant la revendication 5, caractérisé en ce que, pour l'impression polychrome, sont montés en série par rapport à une voie de transport du support à imprimer (9) qui relie un poste d'entrée (12) du support à imprimer à un poste de sortie (13), plusieurs postes d' impression comportant chacun un générateur de caractères (14), une zone de circulation (2, 3, 4, 5, 12) dans laquelle le support d'encre (1) circule en continu et un poste d'impression (7), les supports d'encre (1) pouvant être revêtus respectivement d'une couleur de base pour l'impression en plusieurs couleurs.

FIG 1

FIG 2

# FIG 3

# FIG 4